# EUROPÄISCHE PATENTANMELDUNG

(11) **EP 1 845 316 A2**
(43) Veröffentlichungstag der Anmeldung: **17.10.2007**
(21) Anmeldenummer: 07005740.1
(22) Anmeldetag: 21.03.2007
(51) Int. Cl.: F24F 6/04

(54) **Gas-Behandlungs-Vorrichtung**

(30) Priorität: 13.04.2006 DE 102006017977
(71) Anmelder: Geobra Brandstätter GmbH & Co. KG, D-90513 Zirndorf (DE)
(72) Erfinder: Brandstätter, Horst, 90513 Zirndorf (DE); Brandstätter, Conny, 90768 Fürth (DE)
(74) Vertreter: Rau, Albrecht

(57) **Zusammenfassung**

Vorrichtung zur Behandlung von Gasen, insbesondere zur Befeuchtung und/oder zur Reinigung von Raumluft, mit einem einen GehäuseInnenraum zumindest teilweise umschließenden Gehäuse (2), einem in dem Gehäuse (2) angeordneten Flüssigkeitstank (6) zur Aufnahme einer Flüssigkeit, einem Verdunstungs-Einsatz (30; 30b; 30c), einem in dem Verdunstungs-Einsatz (30; 30b; 30c) angeordneten Flüssigkeits-Verdunstungs-Material (46) zur Verdunstung der Flüssigkeit, einem von außerhalb des Gehäuses (2) zum Flüssigkeits-Verdunstungs-Material (46) führenden Gas-Zuführ-Kanal zur Zuführung des zu behandelnden Gases zu dem Flüssigkeits-Verdunstungs-Material (46), mindestens einem in dem Gas-ZuführKanal angeordneten Ventilator (62; 62a; 62b; 62c), und mindestens einer Pumpe (28) zur Beförderung von Flüssigkeit von dem Flüssigkeitstank (6) zu dem Flüssigkeits-Verdunstungs-Material (46).

## Beschreibung

Die Erfindung betrifft eine Vorrichtung zur Behandlung von Gasen, insbesondere zur Befeuchtung und/oder Reinigung von Raumluft.

Es sind zahlreiche Geräte zur Behandlung von Raumluft bekannt. Diese weisen den Nachteil auf, dass sie häufig nicht gut funktionieren oder sehr wartungsintensiv sind.

Der Erfindung liegt die Aufgabe zugrunde, eine Vorrichtung zur Behandlung von Gasen zu schaffen, die gut funktioniert und einfach zu warten ist.

Die Aufgabe wird durch die Merkmale des Anspruches 1 gelöst. Der Kern der Erfindung besteht darin, auf ein Flüssigkeits-Verdunstungs-Material, insbesondere in Form von Granulat oder Vlies, aus einem Flüssigkeitstank Flüssigkeit, insbesondere Wasser, zu pumpen und dort zu verteilen. Die Luftreinigung und Luftbefeuchtung erfolgt derart, dass durch einen Ventilator Umgebungsluft eingesaugt und durch das Flüssigkeits-Verdunstungs-Material geblasen wird.

Weitere vorteilhafte Ausgestaltungen der Erfindung ergeben sich aus den Unteransprüchen.

Zusätzliche Merkmale und Einzelheiten der Erfindung ergeben sich aus der Beschreibung mehrerer Ausführungsbeispiele anhand der Zeichnungen. Es zeigen:
- Fig. 1: eine Ansicht einer Gas-Behandlungs-Vorrichtung mit teilweise ausgezogenem Verdunstungs-Einsatz gemäß einem ersten Ausführungsbeispiel,
- Fig. 2: einen Diagonalschnitt gemäß der Schnittlinie II-II in Fig. 1 mit eingeschobenem Verdunstungs-Einsatz,
- Fig. 3: eine Ansicht gemäß Fig. 2 einer Gas-Behandlungs-Vorrichtung gemäß einem zweiten Ausführungsbeispiel,
- Fig. 4: eine Ansicht gemäß Fig. 2 einer Gas-Behandlungs-Vorrichtung gemäß einem dritten Ausführungsbeispiel, und
- Fig. 5: eine Ansicht gemäß Fig. 2 einer Gas-Behandlungs-Vorrichtung gemäß einem vierten Ausführungsbeispiel.

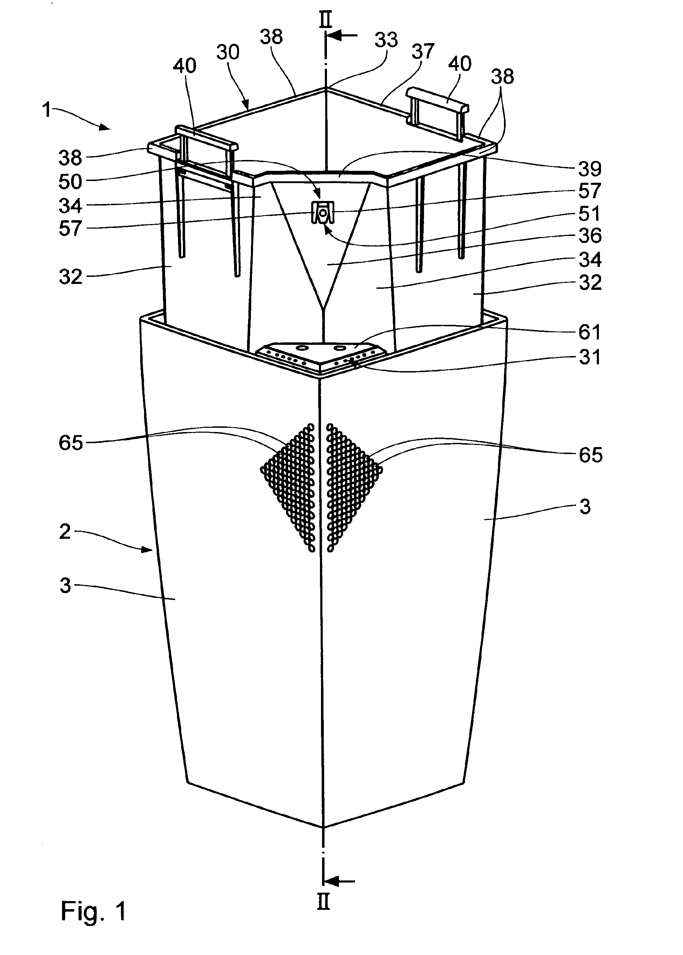

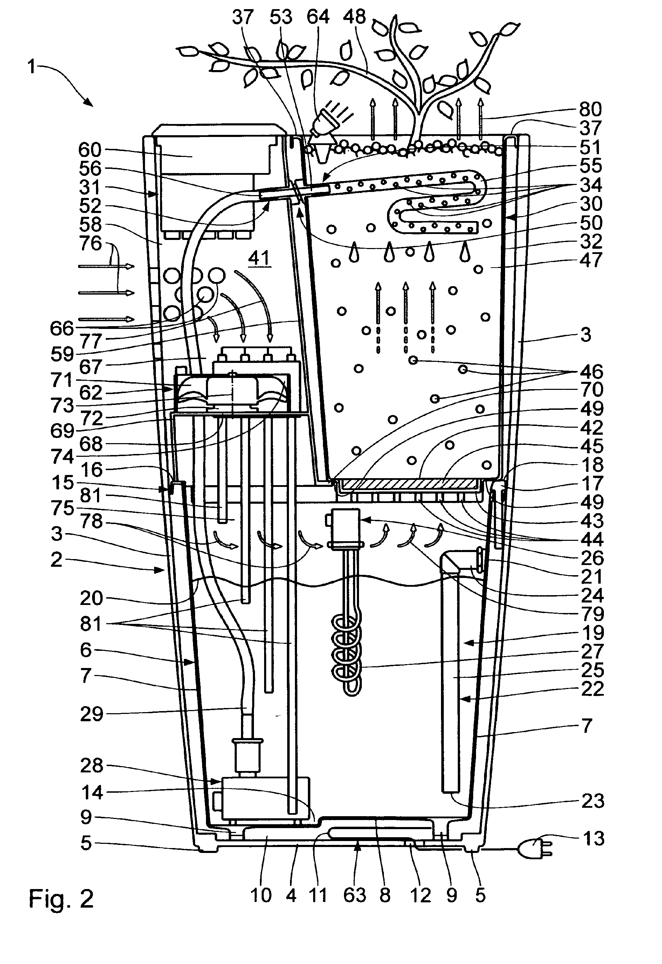

Im Folgenden wird unter Bezugnahme auf die Figuren 1 und 2 eine Vorrichtung 1 zur Behandlung von Gasen gemäß einem ersten Ausführungsbeispiel beschrieben. Diese weist ein nach oben offenes, sich nach oben erweiterndes, jeweils quadratische Querschnitte aufweisendes Gehäuse 2 auf, welches besteht aus vier paarweise einander gegenüberliegenden Seitenwänden 3 und einem mit allen Seitenwänden verbundenen, horizontalen Boden 4. Im Randbereich des Bodens sind nach unten vorstehende Sockel 5 vorgesehen. Das Gehäuse ist einteilig ausgebildet. Es besteht vorzugsweise aus Kunststoff.

In das Gehäuse 2 ist ein Flüssigkeitstank 6 eingesetzt. Der Flüssigkeitstank 6 erstreckt sich ungefähr vom Boden 4 über die halbe Höhe des Gehäuses 2. Der Flüssigkeitstank 6 ist auf dem Boden 4 abgestützt. Er weist vier einander paarweise gegenüberliegende Seitenwände 7 auf, die sich nach oben hin erweitern, ungefähr entsprechend der Erweiterung der Seitenwände 3. Die Seitenwände 7 verlaufen ungefähr parallel zu den Seitenwänden 3 des Gehäuses 2. Der Flüssigkeitstank 6 weist ferner einen Tank-Boden 8 auf, der mit den vier Seitenwänden 7 verbunden ist. Auf der Unterseite des Tank-Bodens 8 sind Tank-Sockel 9 vorgesehen, über die der Flüssigkeitstank 6 auf der Innenseite des Bodens 4 abgestützt ist. Zwischen den Böden 4 und 8 ist ein Kabel-Aufnahme-Raum 10 gebildet, in dem ein elektrisches Anschlusskabel 11 Aufnahme findet, das durch eine Ausnehmung 12 im Boden 4 mit einem Stecker 13 nach außen geführt ist.

Der Flüssigkeitstank 6 ist nach oben offen ausgebildet und frei aus dem Gehäuse 2 herausnehmbar. Der Tankboden 8 weist in der in Fig. 2 linken Hälfte eine Pumpenvertiefung 14 auf. Es ist auch möglich, keine derartige Vertiefung vorzusehen. Der Flüssigkeitstank 6 weist einen oberen umlaufenden, im Querschnitt U-förmigen, nach unten offenen Rand 15 mit einer nach oben weisenden umlaufenden, planaren Abstützfläche 16 auf. In dem Rand 15 sind mehrere, einander in der Regel gegenüberliegende, nach oben ausziehbare, bügelförmige Griffe 17 vorgesehen, die ein Herausheben des Flüssigkeitstanks 6 aus dem Gehäuse 2 erleichtern. Die Griffe 17 weisen auf ihrer Oberseite eine mit der Abstützfläche 16 fluchtende Abstützfläche 18 auf.

In dem Flüssigkeitstank 2 ist ein Überlauf 19 angeordnet. Dieser weist in einer Seitenwand 7 oberhalb des Soll-Flüssigkeitsspiegels 20 eine Durchtritts-Öffnung 21 auf, an der ein fast bis zum Tank-Boden 8 reichendes Steigrohr 22 befestigt ist, welches nach unten offen ist. Die Eintrittsöffnung 23 des Steigrohres 22 befindet sich vorzugsweise im Bereich der unteren 10 % der Höhe des Flüssigkeitstanks 6. Die Durchtritts-Öffnung 21 befindet sich vorzugsweise im Bereich des oberen Viertels des Flüssigkeitstanks 6. Das Steigrohr 22 besteht aus einem sich an die Durchtrittsöffnung 21 anschließenden horizontalen Abschnitt 24 sowie einem sich daran anschließenden vertikalen Abschnitt 25.

An einer Seitenwand 7 ist oberhalb des Soll-Flüssigkeitsspiegels 20 eine Flüssigkeits-Heiz-Einrichtung 26 befestigt, welche sich in den Bereich unterhalb des Soll-Flüssigkeitsspiegels 20 erstreckende Heiz-Wendeln 27 aufweist. Die Einrichtung 26 ist nach Art einer Aquariumheizung mit Temperaturregelung ausgebildet. Die Einrichtung 26 wird über das Kabel 11 mit Strom versorgt.

In der Pumpen-Vertiefung 14 ist eine Flüssigkeits-Pumpe 28 angeordnet, die über nicht dargestellte Riemen am Boden 8 festgelegt ist. Die Pumpe 28 wird über die nachfolgend beschriebene Steuer-Einrichtung 60 mit elektrischem Strom versorgt. Die Pumpe 28 weist im Bereich des Bodens 8 eine nicht dargestellte Eintrittsöffnung auf, durch die Flüssigkeit, insbesondere Wasser, aus dem Flüssigkeitstank 6 angesaugt wird. An der Pumpe 28 ist ein nach oben aus dem Flüssigkeitstank 6 herausführender Schlauch 29 befestigt.

Oberhalb des Flüssigkeitstanks 6 befinden sich, jeweils auf gleicher Höhe ein herausnehmbarer Verdunstungs-Einsatz 30 sowie ein Steuer-/Lüftungs-Einsatz 31. Der Verdunstungs-Einsatz 30 weist vier paarweise gegenüberliegende Seitenwände 32 auf, die im Wesentlichen parallel zu den Seitenwänden 3 verlaufen. Im Bereich einer Ecke, gegenüberliegend der Ecke 33 ist in dem Einsatz 30 eine Aussparung vorgesehen, die Raum schafft für den Einsatz 31. Die Aussparung wird begrenzt durch zwei nach innen - das heißt in den Innenraum des Einsatzes 30 - zurückspringende, aufeinander senkrecht stehende, Zwischenwände 34 und eine im Querschnitt 3 dreieckige schräg verlaufende Zwischenwand 36. Der Einsatz 30 weist einen oberen, im Querschnitt U-förmigen, nach unten offenen Rand 37 bestehend aus aufeinander senkrechten Randabschnitten 38 und einem im Bereich der Zwischenwand 36 parallel zu einer Diagonalen verlaufenden Randabschnitt 39 auf. Der Einsatz 30 weist mindestens zwei, einander paarweise gegenüberliegende, bogenförmige, nach oben herausziehbare Griffe 40 auf, wie sie auch an dem Flüssigkeitstank 6 vorgesehen sind. Die vom Einsatz 30 ausgesparte Ausnehmung 41 weist im Wesentlichen einen dreieckigen Querschnitt auf. Der Einsatz 30 weist einen Einsatz-Boden 42 auf, in dem eine Vertiefung 43 vorgesehen ist. Von der Vertiefung 43 aus erstrecken sich Gas-Eintritts-Öffnungen 44 vertikal nach unten, die den Boden 42 vollständig durchdringen. Die Gas-Eintritts-Öffnungen 44 sind über einen Großteil der Fläche des Einsatz-Bodens 42 verteilt. In der Vertiefung 43 ist ein gasdurchlässiges Gitter 45 oder Vlies angeordnet, das verhindert, dass das sich darüber befindende Granulat 46 durch die Öffnungen 44 herausrieselt oder diese verstopft. Der von den Seitenwänden 32 umschlossene Innenraum 47 des Einsatzes 30 ist im Wesentlichen mit Granulat 46 gefüllt. Es ist möglich, in diesem Granulat 46 eine oder mehrere Pflanzen 48 mit ihrem Wurzelwerk zu halten. Dies ist jedoch nicht zwingend erforderlich. Der Einsatz 30 weist auf der Außenseite des Bodens 42 einen umlaufenden, sich auf derselben Höhe befindlichen, horizontalen, nach innen vorspringenden Rand 49 auf, der dicht, im Wesentlichen gasdicht auf den Abstützflächen 16 und 18 aufliegt.

In dem oberen Bereich der Zwischenwand 36 ist eine Kupplung 50 bestehend aus einem ersten, dem Einsatz 30 zugeordneten Kupplungs-Teil 51 sowie einem zweiten dem Einsatz 31 zugeordneten Kupplungs-Teil 52 angeordnet. Das Kupplungs-Teil 51 weist einen in den Innenraum 47 vorstehenden Rohrstutzen 53 auf, auf den ein mit Löchern 54 perforierter Schlauch 55 aufgesteckt ist. Der Schlauch 55 befindet sich im oberen Bereich des Granulats 46 oder auf dessen Oberfläche. Das zweite Kupplungs-Teil 52 weist ebenfalls einen nach innen vorspringenden Rohrstutzen 56 auf, auf den der Schlauch 29 aufgeschoben ist. Die beiden Kupplungs-Teile 51 und 52 weisen jeweils zwei, an ihren spitzen Enden frei vorstehende Verbindungs-Keile 57 auf, wobei die Keile 57 des Kupplungs-Teils 51 nach unten spitz zulaufen und die Keile 57 am Kupplungs-Teils 52 nach oben spitz zulaufen. Bei dem Einschieben des Einsatzes 30 in das Gehäuse 2 greifen die korrespondierenden Keile 57 ineinander und ziehen durch die schrägen Keilflächen die Kupplungs-Teile 51 und 52 dichtend aneinander. Zur Verbesserung der Dichtung kann auf der jeweiligen Außenseite der Kupplungs-Teile 51 und 52 eine Dichtung, beispielsweise in Form eines Dichtungsrings, vorgesehen sein. Durch die Kupplung 50 wird der Schlauch 55 mit dem Schlauch 29 verbunden.

Der Steuer-/Lüftungs-Einsatz 31 weist ein die Ausnehmung 41 füllendes, hinsichtlich der Höhe ungefähr der Höhe des Einsatzes 30 entsprechendes Gehäuse bestehend aus zwei aufeinander senkrecht stehenden Seitenwänden 58 sowie einer die Seitenwände 58 verbindenden Seitenwand 59 auf. Das Kupplungs-Teil 52 ist in der Seitenwand 59 angeordnet. Der Einsatz 31 weist eine Steuer-Einrichtung 60 mit einem nach oben vorstehenden Bedienfeld 61 auf. Die Steuer-Einrichtung 60 ist wasserdicht. Die Steuer-Einrichtung 60 ist zur Stromversorgung unter anderem mit dem Kabel 11 verbunden. Die Steuer-Einrichtung 60 ist über nicht dargestellte elektrische Leitungen mit allen elektrischen Teilen der Vorrichtung 1, das heißt der Flüssigkeits-Heiz-Einrichtung 26, der Flüssigkeits-Pumpe 28, dem noch zu beschreibenden Lüfter 62, der Glühlampe 64 sowie der Strom-ZuführEinrichtung 63 in Form des Kabels 11 verbunden. Die Steuer-Einrichtung 60 gestattet unter anderem eine Programmierung der Betriebszeit der Vorrichtung 1, eine Regelung der gepumpten Flüssigkeitsmenge, eine Einstellung der Flüssigkeitstemperatur über die Heiz-Einrichtung 26 sowie die Betriebszeiten einer optimalen, ebenfalls mit der Steuer-Einrichtung 60 verbundenen Glühlampe 64, die am Einsatz 30 befestigt ist.

In den zwei an den Einsatz 31 angrenzenden Seitenwänden 3 des Gehäuses 2 sind zahlreiche Gas-Eintritts-Öffnungen 65 vorgesehen. Auf der Innenseite der Öffnungen 65 befinden sich in den Seitenwänden 58 korrespondierende Öffnungen 66. Es ist auch möglich, dass in den Seitenwänden 58 hinter den Öffnungen 65 größere Ausnehmungen vorgesehen sind. Darüber hinaus ist möglich, dass die Seitenwände 58 nicht vorgesehen sind und der Einsatz 31 im Wesentlichen nur durch die Seitenwand 59 zusammengehalten wird. In jedem Fall sind die Öffnungen 65 und 66 derart aneinander angeordnet, dass Umgebungsluft von außen ungehindert in den Innenraum 67 des Einsatzes 31 eintreten kann. An der Seitenwand 59 ist ein im Wesentlichen horizontaler Steg 68 befestigt, der über einen vertikalen, mit dem Steg 68 verbundenen Stütz-Abschnitt 69 auf der Abstütz-Fläche 16 dichtend abgestützt ist. Am unteren Rand der Seitenwand 59 ist ein horizontaler, in Richtung auf den Einsatz 30 vorstehender Stützsteg 70 vorgesehen, auf dem der Rand 49 des Einsatzes 30 dichtend aufliegt. Auf dem Steg 68 ist ein Lüfter 62 mit einem Lüfterrad 71 und einem Lüftermotor 72 abgestützt. Das Lüfterrad 71 ist um eine vertikale Lüfterachse 73 drehbar gelagert. Das Lüfterrad 71 ist von einem Lüftergehäuse 74 umschlossen. Oberhalb des Lüfterrades 71 befinden sich nicht dargestellte LufteintrittsÖffnungen und unterhalb des Lüfterrades nicht dargestellte LuftaustrittsÖffnungen. Bei dem Lüfter 62 handelt es sich um einen Axiallüfter, das heißt die angesaugte Luft wird im Wesentlichen parallel zur Lüfterachse 73 beschleunigt. Der Innenraum 67 des Einsatzes 31 oberhalb des Lüfterrades weist beim Betrieb des Lüfters 62 Unterdruck auf. Unterhalb des Lüfterrades befindet sich ein Überdruck-Raum 75, der begrenzt wird durch den Steg 68, den Stützabschnitt 69, den Abschnitt der Seitenwände 7 vom oberen Rand 15 bis zum Soll-Flüssigkeitsspiegel 20, nach unten durch den Flüssigkeitsspiegel 20 sowie durch den Einsatz-Boden 42. Aufgrund des dichten Aufeinandersitzens der Einsätze 30 und 31 auf dem Flüssigkeitstank 6 ist der Überdruck-Raum 75 im Wesentlichen gasdicht. Das beim Betrieb des Lüfters 62 unter Überdruck stehende Gas kann nur durch die Gas-Eintritts-Öffnungen 44 in das Granulat 46 entweichen. Der vom von außen eintretenden Gas durchströmte Weg durch die Öffnungen 65 und 66, den Innenraum 67, den Innenraum des Lüfters 62 und den Überdruckraum 75, wird als Gas-Zuführ-Kanal bezeichnet, der Gas von außerhalb des Gehäuses 2 dem Granulat 46 zuführt. Zur Bestimmung des Flüssigkeitsspiegels 20 sind an dem Steg 68 mehrere, im vorliegenden Fall vier, verschieden weit nach unten vorspringende auch unter den Soll-Flüssigkeitspegel 20 reichende Füllstandselektroden 81 vorgesehen, die eine Füllstandsmessung des Flüssigkeitstanks 6 ermöglichen und über nicht dargestellte Verbindungsleitungen mit der Steuer-Einrichtung 60 verbunden sind.

Im Folgenden wird zunächst die Montage und anschließend der Betrieb der Vorrichtung 1 beschrieben. Das Kabel 11 wird auf die benötigte Außenlänge des Kabels eingestellt. Der überschüssige Teil des Kabels 11 kann in den Kabel-Aufnahme-Raum 10 eingeschoben werden. Anschließend wird der Einsatz 31 eingesetzt, sodass dieser auf dem Rand 15 des Flüssigkeitstanks 6 zu Ruhen kommt. Der Einsatz 30 ist bereits mit Granulat gefüllt und möglicherweise mit einer Pflanze 48 bepflanzt. Der Einsatz 30 wird in das Gehäuse 2 eingesetzt, sodass die Kupplungs-Teile 51, 52 ineinander greifen. Durch die Kupplungs-Verbindung kann der Einsatz 30 ohne Zerlegung der Vorrichtung 1 einfach gewechselt werden. Die elektrischen Teile werden entweder durch entsprechende elektrische Kupplungen mit der Stromzuführeinrichtung verbunden oder sind dies bereits. Wesentlich ist, dass alle elektrischen Bauteile aus Sicherheitsgründen flüssigkeitsdicht verschlossen sind. Nach der kompletten Montage der Vorrichtung 1 und nach deren elektrischer Inbetriebnahme wird die Flüssigkeit über das Granulat 46 in den Flüssigkeitstank 6 gegossen.

Wird der Lüfter 62 in Betrieb gesetzt, so wird Luft von außen entlang der Strömungs-Pfeile 76 eingesaugt, entlang der Strömungspfeile 77 in den Lüfter gelenkt, dort beschleunigt und in den Überdruckraum 75 gedrückt. Dort streicht die Luft gemäß den Strömungspfeilen 78 über den Flüssigkeitsspiegel 20 und gewinnt so an Luftfeuchtigkeit. Anschließend wird die Luft entlang der Strömungspfeile 79 durch die Gas-Eintritts-Öffnungen 44 dem Granulat 46 zugeführt. Die Pumpe 28 hat vorher über den Schlauch 29, die Kupplung 50 und den Schlauch 55 Flüssigkeit, insbesondere Wasser, dem Granulat 46 zugeführt, sodass dieses an seiner Oberfläche flüssigkeitsbenetzt ist. Das Granulat 46 sättigt sich mit der Flüssigkeit und gibt diese dann wieder allmählich an die vorbeiströmende Luft ab. Die von unten in den Einsatz 30 eintretende Luft durchstreicht das Granulat 46, wird hierbei gereinigt und nimmt gleichzeitig weitere Luftfeuchtigkeit auf. Anschließend tritt die Luft entlang den Strömungspfeilen 80 nach oben aus dem Gehäuse 2 aus und gelangt als aufbereitete, mit erhöhter Feuchtigkeit versehene, gereinigte Luft wieder in den Raum, dessen Raumluft zu behandeln war. Wird zuviel Flüssigkeit in den Flüssigkeitstank 6 gefüllt, so sorgt der Überlauf 19 dafür, dass die Flüssigkeit durch den Spalt in den Seitenwänden 3 und 7 und die Ausnehmung 12 nach unten austritt. Durch das nach unten geführte vertikale Rohr 25 bleibt jedoch der Überdruckraum 75 beim Normalbetrieb gasdicht. Der Überlauf 19 schafft somit kein Druckleck. Der Überlauf 19 verhindert, dass bei einem unachtsamen Befüllen die Heiz-Einrichtung 26 oder der Lüfter 62 unter Wasser gesetzt werden. Das Gehäuse 2 ist für das Funktionieren der Vorrichtung 1 nicht zwingend erforderlich. Es kann insofern beispielsweise auch ein Gehäuse aus Korbgeflecht verwendet werden. Je nach Ausgestaltung können zusätzliche schalldämmende Maßnahmen, wie z. B. Dämpfungselemente, Luftführungsrippen, Schallschutzmatten etc. eingesetzt werden.

Die Füllstandselektroden 81 ermitteln den Flüssigkeitsspiegel 20 und teilen diesen im Bedienfeld 61 der Bedienperson mit.

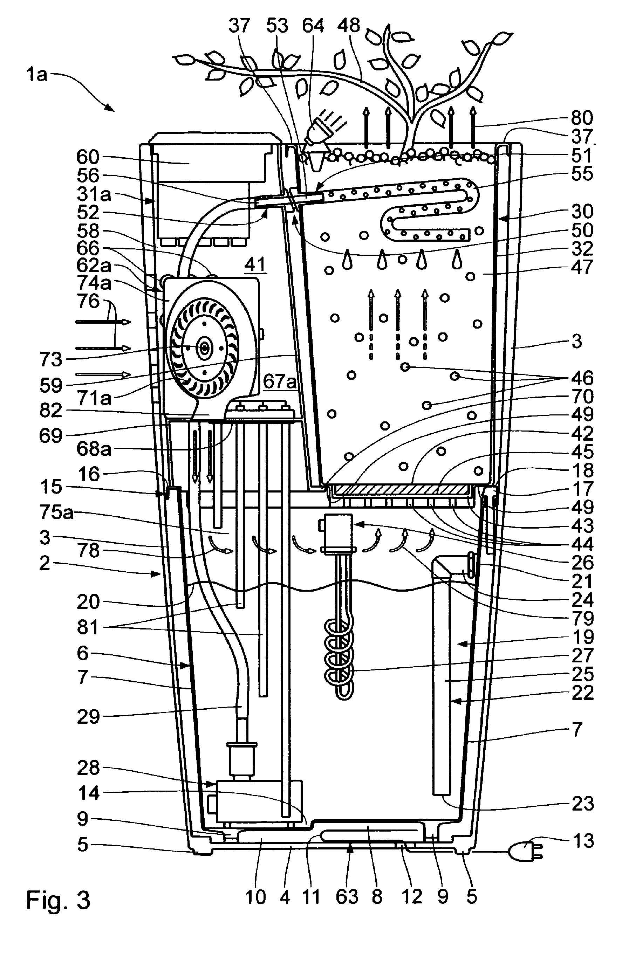

Im Folgenden wird unter Bezugnahme auf Fig. 3 ein zweites Ausführungsbeispiel der Erfindung beschrieben. Identische Teile erhalten dieselben Bezugszeichen, wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem a. Der wesentliche Unterschied gegenüber dem ersten Ausführungsbeispiel besteht in der Ausgestaltung des Lüfters. Es handelt sich hierbei um einen Radiallüfter, bei dem die eingesaugte Luft tangential zur Lüfterachse 73 beschleunigt wird. Die Lüfterachse verläuft im Wesentlichen horizontal. Der Lüfter weist am unteren Ende des Lüftergehäuses 74a eine AustrittsÖffnungen 82 auf, durch die die vom Lüfter 62a beschleunigte Luft nach unten austritt.

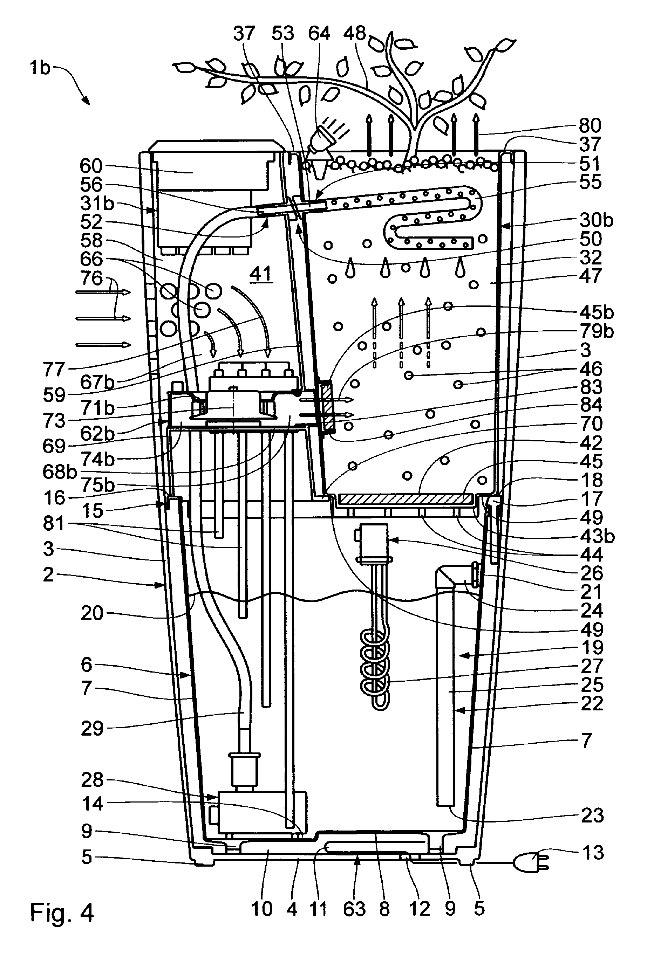

Im Folgenden wird unter Bezugnahme auf Fig. 4 ein drittes Ausführungsbeispiel der Erfindung beschrieben. Identische Teile erhalten dieselben Bezugszeichen, wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem b. Der wesentliche Unterschied gegenüber dem ersten Ausführungsbeispiel besteht darin, dass in der in Fig. 4 linken Seitenwand des Einsatzes 30b eine Luft-Eintritts-Öffnung 83 vorgesehen ist, die im Wesentlichen horizontal verläuft. In dieser ist ein Gitter 45b vorgesehen, damit das Granulat 46 nicht außerhalb des Einsatzes 30b gelangen kann. Darüber hinaus ist die Öffnung 83 durch eine in den Innenraum 47 vorspringende Manschette 84 begrenzt, damit Flüssigkeit durch die Öffnung 83 nicht austreten kann. Bei dem Lüfter 62b handelt es sich um einen Radiallüfter mit vertikaler Lüfterachse 73. In den Lüfter 62b eingesaugte Luft tritt horizontal durch die Öffnung 83 entsprechend den Strömungspfeilen 79b in den Innenraum 47 des Einsatzes 30b ein.

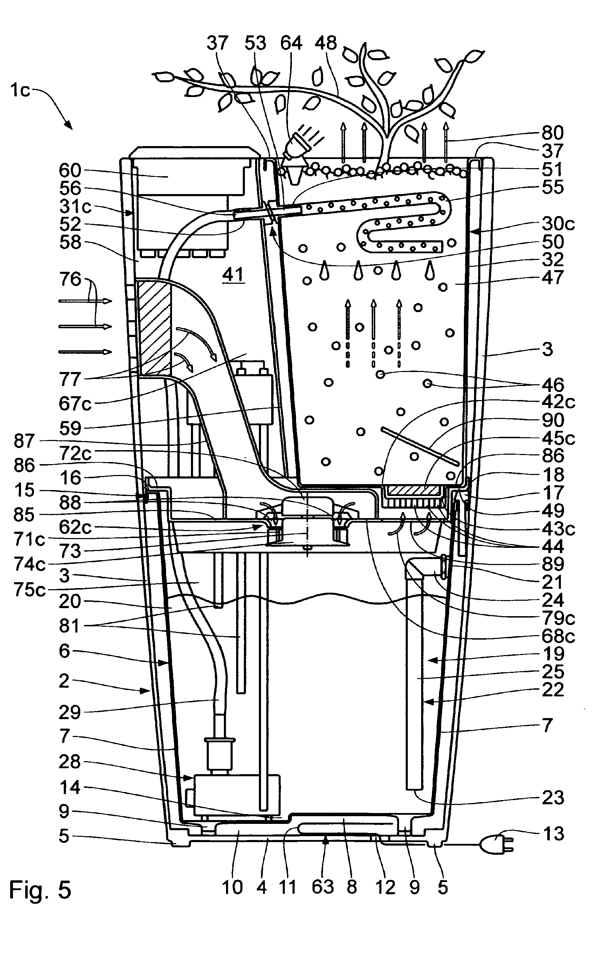

Im Folgenden wird unter Bezugnahme auf Fig. 5 ein viertes Ausführungsbeispiel der Erfindung beschrieben. Identische Teile erhalten dieselben Bezugszeichen, wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem c. Der wesentliche Unterschied gegenüber dem ersten Ausführungsbeispiel besteht in der Positionierung des Lüfters 62c. Der Lüfter 62c befindet sich mittig oberhalb des Flüssigkeitstanks 6 und ist an einer Tragplatte 85 befestigt, welche einen umlaufenden oberen Rand 86 besitzt. Der Rand 86 liegt auf dem Rand 15 dichtend auf. Auf der Tragplatte 85 ist ein Luft-Zuführ-Rohr 87 befestigt, welches an den Eintritt-Öffnungen 65, 66 ansetzt, dann nach unten geführt ist und dann den Lüfter 62c nach oben hin abdeckt. Der Lüfter 62c ist als Radiallüfter ausgebildet. In der Tragplatte 85 sind oberhalb des Lüfterrades 7 1 c Luft-Eintritts-Öffnungen 88 vorgesehen. Unterhalb der Gas-Eintritts-Öffnungen 44 des Einsatzes 30c weist die Tragplatte 85 eine Ausnehmung 89 auf, um entlang des Strömungspfeilen 79c den Eintritt der beschleunigten Luft in den Einsatz 30c zu ermöglichen. Es ist möglich, mehr als ein Luft-Zuführ-Rohr 87, insbesondere zwei vorzusehen, die von verschiedenen Seiten des Gehäuses 2 Luft dem Lüfterrad 71 c zuführen. Das Luft-Zuführ-Rohr 87 ist abnehmbar ausgebildet. In diesem kann ein Filter, insbesondere eine Aktivkohle-Filterkartusche angeordnet sein. Oberhalb des Gitters 45c kann ein schräg angeordnetes Leitblech 90 zum Schutz des Lüftermotors 72c vorgesehen sein. Wie bei den anderen Ausführungsbeispielen kann zusätzlich eine Heiz-Einrichtung 26 vorgesehen sein.

## Patentansprüche

1. Vorrichtung zur Behandlung von Gasen, insbesondere zur Befeuchtung und/oder zur Reinigung von Raumluft, mit
a) einem einen Gehäuse-Innenraum zumindest teilweise umschließenden Gehäuse (2),
b) einem in dem Gehäuse (2) angeordneten Flüssigkeitstank (6) zur Aufnahme einer Flüssigkeit,
c) einem Verdunstungs-Einsatz (30; 30b; 30c),
d) einem in dem Verdunstungs-Einsatz (30; 30b; 30c) angeordneten Flüssigkeits-Verdunstungs-Material (46) zur Verdunstung der Flüssigkeit,
e) einem von außerhalb des Gehäuses (2) zum Flüssigkeits-Verdunstungs-Material (46) führenden Gas-Zuführ-Kanal zur Zuführung des zu behandelnden Gases zu dem Flüssigkeits-Verdunstungs-Material (46),
f) mindestens einem in dem Gas-Zuführ-Kanal angeordneten Ventilator (62; 62a; 62b; 62c), und
g) mindestens einer Pumpe (28) zur Beförderung von Flüssigkeit von dem Flüssigkeitstank (6) zu dem Flüssigkeits-Verdunstungs-Material (46).

2. Vorrichtung gemäß Anspruch 1, **dadurch gekennzeichnet, dass** der Flüssigkeitstank (6) und/oder der Verdunstungs-Einsatz (30; 30b; 30c) und/oder der Ventilator (62; 62a; 62b; 62c) aus dem Gehäuse (2) herausnehmbar sind.

3. Vorrichtung gemäß Anspruch 1 oder 2, **dadurch gekennzeichnet, dass** es sich bei dem Flüssigkeits-Verdunstungs-Material (46) um Granulat und/oder Vlies handelt.

4. Vorrichtung gemäß einem der vorangehenden Ansprüche, **dadurch gekennzeichnet, dass** an dem Flüssigkeitstank (6) ein nach außerhalb des Gehäuses (2) führender Überlauf (19) vorgesehen ist.

5. Vorrichtung gemäß einem der vorangehenden Ansprüche, **dadurch gekennzeichnet, dass** eine mit dem Flüssigkeitstank (6) zusammenwirkende Flüssigkeitsstands-Mess-Einrichtung (81) zur Bestimmung des Füllstands der Flüssigkeit vorgesehen ist.

6. Vorrichtung gemäß einem der vorangehenden Ansprüche, **dadurch gekennzeichnet, dass** in dem Gehäuse (2) Gas-Eintritts-Öffnungen (65) zur Zuführung von Gas von außerhalb des Gehäuses (2) zu dem Gas-Zuführ-Kanal vorgesehen sind.

7. Vorrichtung gemäß einem der vorangehenden Ansprüche, **dadurch gekennzeichnet, dass** der Verdunstungs-Einsatz (30; 30b; 30c) mindestens eine Gas-Eintritts-Öffnung (44) zur Zuführung von Gas von dem Gas-Zuführ-Kanal zum Flüssigkeits-Verdunstungs-Material (46) aufweist.

8. Vorrichtung gemäß Anspruch 7, **dadurch gekennzeichnet, dass** die Gas-Eintritts-Öffnung (44) in einer Seitenwand (32) und/oder dem Boden (42) des Verdunstungs-Einsatzes (30; 30b; 30c) vorgesehen ist.

9. Vorrichtung gemäß einem der vorangehenden Ansprüche, **dadurch gekennzeichnet, dass** der Verdunstungs-Einsatz (30; 30b; 30c) eine Flüssigkeits-Eintritts-Öffnung (53) aufweist, die über eine Kupplung (50) mit der Pumpe (28) verbindbar ist.

10. Vorrichtung gemäß einem der vorangehenden Ansprüche, **dadurch gekennzeichnet, dass** das Gehäuse (2) nach oben offen ausgebildet ist.
